# EUROPEAN PATENT APPLICATION

(11) **EP 4 650 256 A1**
(43) Date of publication of application: **19.11.2025**
(21) Application number: 24176743.3
(22) Date of filing: 17.05.2024
(51) Int. Cl.: B62D 57/02

(54) **CLIMBING ROBOT**

(71) Applicant: British Telecommunications public limited company, London E1 8EE (GB)
(72) Inventor: The designation of the inventor has not yet been filed
(74) Representative: British Telecommunications public limited company Intellectual Property Department

(57) **Abstract**

An apparatus for climbing a structure, the apparatus comprising alan: ascent mechanism for elevating the apparatus up the structure; arresting mechanism for actuation between a: first position in which the arresting mechanism is engaged to the structure so as to impede descent of the apparatus; and second position in which the arresting mechanism is disengaged from the structure so as to allow ascent of the apparatus; urging mechanism for urging the arresting mechanism into the first position; retention mechanism configured to work against the urging mechanism and for retaining the arresting mechanism in the second position; power supply configured to power both the ascent mechanism and the retention mechanism, such that: when powered by the power supply and the ascent mechanism is activated, the retention mechanism is configured to retain the arresting mechanism in the second position and the ascent mechanism is operable to ascend the structure; and when unpowered, the retention mechanism is caused to release the arresting mechanism, thereby causing the urging mechanism to actuate the arresting mechanism into the first position, and the ascent mechanism is deactivated.

## Description

### Field of Invention

The present invention relates to a climbing robot, and in particular to a climbing robot comprising a fall fail-safe mechanism.

### Background

Climbing robots may be used to perform tasks that are unsafe for humans working at height. In addition to improving safety, they can also increase task efficiency and reduce labour costs.

However, loss of power in a climbing robot may cause such a robot to fall; this may put the robot and/or an operator of the robot in danger.

The present invention aims at least to alleviate some of the aforementioned problems.

### Statements of Invention

According to a first aspect of the invention, there is provided an apparatus for climbing a structure, comprising a/an ascent mechanism for elevating the apparatus up the structure; arresting mechanism for actuation between a: first position in which the arresting mechanism is engaged to the structure so as to impede descent of the apparatus; and second position in which the arresting mechanism is disengaged from the structure so as to allow ascent of the apparatus; urging mechanism for urging the arresting mechanism into the first position; retention mechanism configured to work against the urging mechanism and for retaining the arresting mechanism in the second position; power supply configured to power both the ascent mechanism and the retention mechanism, such that: when powered by the power supply and the ascent mechanism is activated, the retention mechanism is configured to retain the arresting mechanism in the second position and the ascent mechanism is operable to ascend the structure; and when unpowered, the retention mechanism is caused to release, thereby for causing the urging mechanism to actuate the arresting mechanism into the first position, and the ascent mechanism is deactivated.

Preferably, the apparatus comprises a first portion and a second portion, said portions being openable so as to receive the structure into the apparatus by a slotting (as opposed to a threading) action. Preferably, first and second portions are configured, when opened, to expose the ascent mechanism to the structure.

Preferably, the apparatus comprises a hinge for coupling the first and second portions. Preferably, the apparatus comprises a fastening mechanism for fastening together the first and second portions. The fastening mechanism may be in the form of a pin, latch or lock.

Preferably, the ascent mechanism comprises: a motor; and at least one gear configured to be driven by the motor.

Preferably, the ascent mechanism comprises: a motor; and at least one wheel configured to be driven by the motor.

Preferably, the urging mechanism is configured to urge the arresting mechanism, when in the first position, against the, or a portion of the, ascent mechanism so as to prevent operation (e.g. rotation and/or actuation) of the ascent mechanism.

Preferably, the arresting mechanism comprises, at least a part of, the ascent mechanism.

Preferably, the arresting mechanism comprises a braking pad for contacting the structure so as to cause braking.

Preferably, the arresting mechanism comprises an arrestor for contacting the ascent mechanism so as to prevent operation of the ascent mechanism (which may specifically include the motor, the at least one gear and/or the at least one wheel).

Preferably, the apparatus comprising at least two opposing wheels for engaging the structure and a compression mechanism for forcing said wheels towards the ascent mechanism, Preferably, at least one of said at least two opposing wheels is driven by the motor.

Preferably, the retention mechanism comprises an actuator, for example, a linear and/or rotary actuator, configured to be powered in order to retain, such as solenoid (push and/or pull); motor (e.g. a winch).

Preferably, the braking pad is shaped and dimensioned to conform with the structure.

Preferably, the structure is a telegraph pole.

Preferably, the urging mechanism is gravity-powered so as to urge the arresting mechanism into the first position under gravity.

Preferably, the ascent mechanism or the arresting mechanism have an openable part for receiving the structure so as to clamp the apparatus to the structure.

Preferably, the ascent mechanism further comprises at least one auxiliary wheel, such as or free-rolling wheel, guide wheel or idling wheel that is disconnected from the motor, thereby not to be driven by the motor, so as to be in connection with the wheels for providing movement of the wheels. Optionally, the at least one auxiliary wheel forms part of the at least two opposing wheels.

Preferably, the urging mechanism, when in the first position, is configured to urge the arresting mechanism against the, or a portion of the, ascent mechanism so as to fasten the apparatus to the structure by means of the ascent mechanism. Moreover, the structure is clamped by the ascent mechanism making direct (optionally, compressive) contact with the structure, for example by means of the wheel/s.

Preferably, the arresting mechanism may be frangible so as to act as a crumple zone or shock absorber.

Preferably, the arresting mechanism comprises an arrestor for preventing operation (e.g. rotation) of the ascent mechanism (e.g. the wheels), wherein the arrestor is caused to engage the wheels ascent mechanism so as to prevent said operation when the retention mechanism is unpowered. The arrestor can be a braking pad, an arrestor pin or a magnetic brake.

Preferably, the arresting mechanism comprises a braking pad which makes contact with the structure when the arresting mechanism is in the first position. The braking pad can be a rolling or a non-rolling member.

Preferably, the apparatus is adjustable in dimensions by means of the opening part, so as to accommodate different shaped poles.

Preferably, the braking pad is adjustable in dimensions so as to accommodate different shaped poles.

Preferably, the braking pad is shaped to, at least in part, envelope and/or grip the structure.

Preferably, the urging mechanism can be a spring, preferably a comprehensive spring.

Preferably, the apparatus can be clamped to the structure so as to receive the structure between two opposing wheels or two-opposing braking pads or an opposing brake pad and a wheel. The wheels and braking pads can be in a directly opposite position from each other or can be in a misaligned position.

Preferably, a chassis is provided to be clamped to the structure by toggle latch.

Preferably, apparatus is used for installing fibre cables. Thus, fibre cable, fibre wedge clamps; for holding fibre cable, push solenoids; for tightening fibre wedge clamps to hold fibre cable and tensioner belt; for pulling fibre through to remove slack is provided.

Preferably, the apparatus is self-powered or self-propelled. As used herein, the ascent mechanism being "activated" preferably connotes the ascent mechanism having a power supply and operating so as to impart motion or acceleration, and said mechanism being "deactivated" preferably connotes the ascent mechanism having no power supply and inoperable to impart motion or acceleration.

Preferably, the urging mechanism is mechanically powered, and may only be mechanically powered.

The above summary is not intended to describe each illustrated embodiment or every implementation of the subject matter hereof. The invention includes any novel aspects described and/or illustrated herein. The invention also extends to methods substantially as herein described and/or as illustrated with reference to the accompanying drawings.

Any apparatus feature may also be provided as a corresponding step of a method. As used herein, means plus function features may alternatively be expressed in terms of their corresponding structure.

Any feature in one aspect of the invention may be applied, in any appropriate combination, to other aspects of the invention. Any, some and/or all features in one aspect can be applied to any, some and/or all features in any other aspect, in any appropriate combination. Particular combinations of the various features described and defined in any aspects of the invention can be implemented and/or supplied and/or used independently.

As used throughout, the word 'or' can be interpreted in the exclusive and/or inclusive sense, unless otherwise specified.

The present invention is now described, purely by way of example, with reference to the accompanying diagrammatic drawings, in which:
Figure 1 is a schematic of a climbing robot on a pole during installation of a cable;
Figures 2, 3, 4 are detailed schematics of the climbing robot; and
Figure 5 is a schematic of an arresting mechanism of the climbing robot.

While various embodiments are amenable to various modifications and alternative forms, specifics thereof have been shown by way of example in the drawings and will be described in detail. It should be understood, however, that the intention is not to limit the claimed inventions to the particular embodiments described. On the contrary, the intention is to cover all modifications, equivalents, and alternatives falling within the spirit and scope of the subject matter as defined by, at least, the claims.

### Specific Description

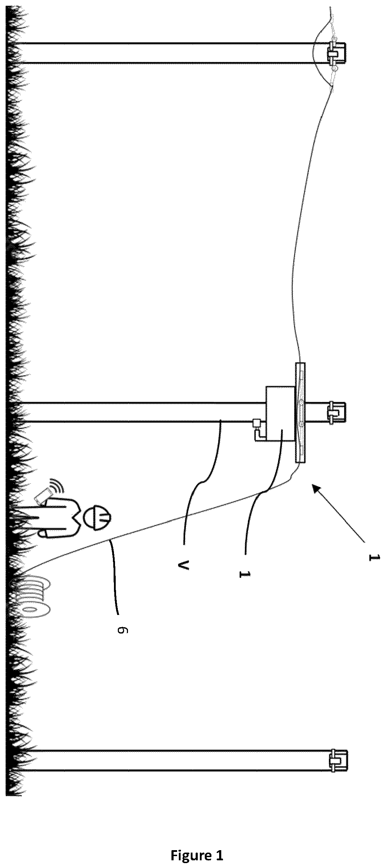

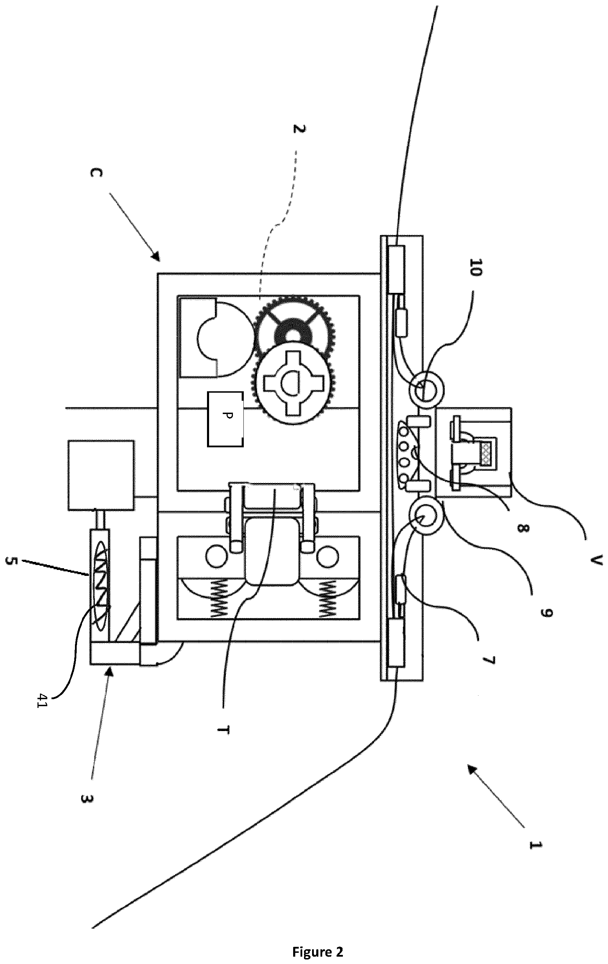

Figure 1 is a schematic of an apparatus 1 in the form of a climbing robot for climbing a structure V, for example a telegraph pole. The climbing robot is, in one example, used to aid installation of overhead telecommunications cables, such as fibre optic cables 6. Figures 2, 3 and 4 are detailed schematics of the apparatus 1, shown mounted on the structure V.

As best shown in Figure 2, the apparatus 1 comprises a/an: ascent mechanism 2; arresting mechanism 3; urging mechanism 4; retention mechanism 5 and power supply P. As described in more detail below, the apparatus 1 is operable to remain stationary elevated on the structure V, to descend controllably, and to ascend up the structure V.

The apparatus 1 comprises a chassis C comprising a first portion and a second portion that are coupled together by a hinge H. By means of the hinge, the chassis is openable so as to receive the structure V into the chassis C and to arrange the structure V for receipt by the ascent mechanism. The chassis C further comprises a toggle latch T, so as to fasten the first and second halves together and enclose the structure V.

The ascent mechanism 2 and retention mechanism 5 are dually powered by the power supply P in the form of a battery.

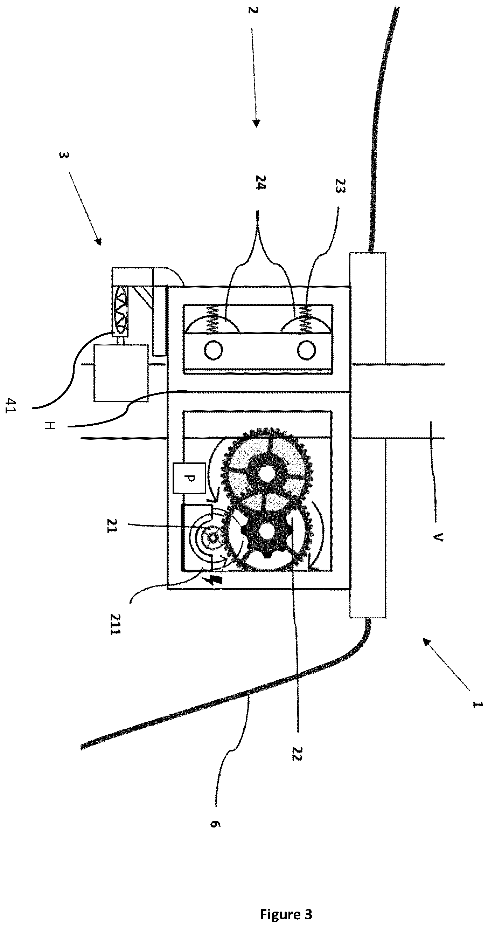

Figure 3 shows the ascent mechanism 2 in more detail, which comprises a motor 21 and a drive wheel 22 (shown as a geared wheel) that is configured to be driven by the motor 21 via a gear system. A motor housing 211 is provided to cover and protect the motor 21. The power supply P provides power to motor 21, and in turn the drive wheel 22 via the gear system so as to cause the apparatus 1 to ascend the structure V, to remain stationary or descend controllably by counteracting gravity.

The apparatus 1 further comprises two guide wheels 24, arranged opposite the drive wheel 22, such that the structure V is receivable therebetween. The guide wheels 24 are urged by compression springs 23 towards the structure V, thereby clamping the structure V between the guide wheels 24 and the drive wheel 22. The compressive force of the guide wheels 24 against the structure V helps improve traction of the guide wheel 24, and therefore improving mobility.

The drive wheel 22 and the guide wheels 24 are in contact with the structure V, so as to drive and guide the apparatus 1 up and down the structure V.

The arresting mechanism 3 comprises a braking pad 31, which is shaped and dimensioned to conform with the cylindrical shape of the structure V and is therefore in the form of a complementary half-cylinder. The arresting mechanism 3 is operable to extend the braking pad into engagement with the structure V so as to impede descent of the apparatus 1 down the structure V by means of friction. The arresting mechanism 3 is provided at a bottom of the apparatus 1, thereby helping to act as a crumple zone in the event that the apparatus falls to the ground.

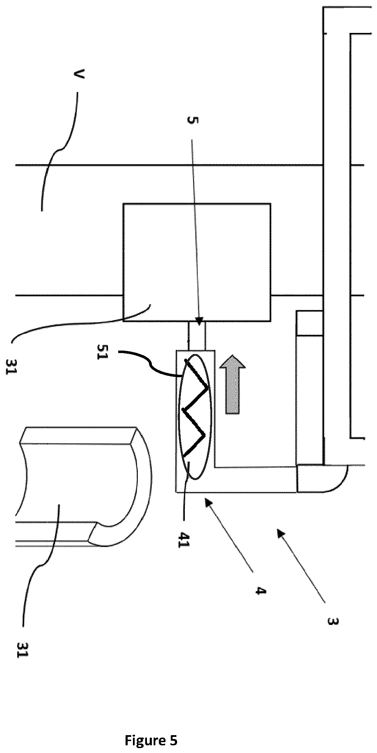

Figures 3 and 5 show the arresting mechanism 3 in a first position, in which the braking pad 31 is urged against the structure V by means of the urging mechanism 4.

The urging mechanism 4 comprises a spring 41, coupled to the braking pad 31, and configured to urge the braking pad 31 to extend against the structure V.

The retention mechanism 5 is in the form of an actuator 51 for retracting the braking pad 31, and configured, when powered, to counteract the urging mechanism 4 so as to pull, and retain, the braking pad 31 away from the structure V. For example, the retention mechanism 5 is in the form of a linear and/or rotary actuator 51 powered by a pull solenoid or the motor 21.

When the retention mechanism 5 is unpowered (e.g. due to an electrical fault or depletion of the power supply P), the retention mechanism 5 is inoperable to counteract the urging mechanism 4, and the urging mechanism 4 therefore forces actuation of the braking pad 31 into the structure V, thereby providing a braking action.

In this way, braking of the apparatus 1 is triggered by the absence of power to retention mechanism 5, allowing the apparatus 1 to fail safe in the event of power loss. Since the same power supply P is used to power the ascent mechanism 2 and the retention mechanism 5, the apparatus 1 is prevented from falling when the ascent mechanism 2 is inoperable.

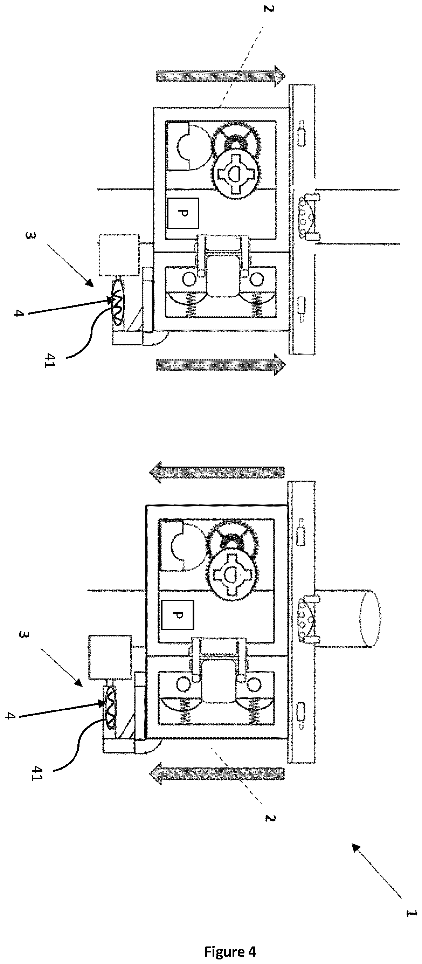

Figure 4 shows the arresting mechanism 3 in a second position, in which the braking pad 31 is disengaged from the structure V, thereby to allow free ascent of the apparatus 1.

To provide the arresting mechanism in the second position, the retention mechanism 5 is powered by the power supply so as to retract and be maintain in a retracted position away from the structure, in counteraction to the urging mechanism 4, the arresting mechanism. Accordingly, the arresting mechanism is prevented from impeding ascent of the robot whilst the retention mechanism 5 - and simultaneously the ascent mechanism 2, is powered.

### Alternatives and Modifications

In an alternative, to achieve failsafe braking of the apparatus, the arresting mechanism 3 is configured to engage, in the first position, the ascent mechanism 2 (more specifically the drive wheel) in addition to, or as an alternative to, engaging the structure. In this example, the arresting mechanism 3 is available to be in the form of an arrestor pin or braking calliper for the drive wheel.

In an alternative, the arresting mechanism 3 comprises, at least a portion of, the drive mechanism. For example, the arresting mechanism 3 is available to actuate the drive mechanism (specifically the drive wheel) between the first and second positions. In the first position, the drive mechanism is urged against the structure by means of the urging mechanism, thereby clamping the structure between the drive wheels and the guide wheels so as to hold the apparatus stationary.

In an alternative, the urging mechanism 4 is gravity-powered so as to urge the arresting mechanism 3 into the first position under gravity.

In an alternative, the guide wheels 24 are driven by the motor and the gear system associated with the drive wheel 22.

Various embodiments of devices have been described herein. These embodiments are given only by way of example and are not intended to limit the scope of the claimed inventions. It should be appreciated, moreover, that the various features of the embodiments that have been described may be combined in various ways to produce numerous additional embodiments. Moreover, while various materials, dimensions, shapes, configurations and locations, etc. have been described for use with disclosed embodiments, others besides those disclosed may be utilized without exceeding the scope of the claimed inventions.

Persons of ordinary skill in the relevant arts will recognise that embodiments may comprise fewer features than illustrated in any individual embodiment described above. The embodiments described herein are not meant to be an exhaustive presentation of the ways in which the various features may be combined. Accordingly, the embodiments are not mutually exclusive combinations of features; rather, embodiments can comprise a combination of different individual features selected from different individual embodiments, as understood by persons of ordinary skill in the art. Moreover, elements described with respect to one embodiment can be implemented in other embodiments even when not described in such embodiments unless otherwise noted. Although a dependent claim may refer in the claims to a specific combination with one or more other claims, other embodiments can also include a combination of the dependent claim with the subject matter of each other dependent claim or a combination of one or more features with other dependent or independent claims. Such combinations are proposed herein unless it is stated that a specific combination is not intended. Furthermore, it is intended also to include features of a claim in any other independent claim even if this claim is not directly made dependent to the independent claim.

Moreover, reference in the specification to "one embodiment," "an embodiment," or "some embodiments" means that a particular feature, structure, or characteristic, described in connection with the embodiment, is included in at least one embodiment of the teaching. The appearances of the phrase "in one embodiment" in various places in the specification are not necessarily all referring to the same embodiment.

Any incorporation by reference of documents above is limited such that no subject matter is incorporated that is contrary to the explicit disclosure herein. Any incorporation by reference of documents above is further limited such that no claims included in the documents are incorporated by reference herein. Any incorporation by reference of documents above is yet further limited such that any definitions provided in the documents are not incorporated by reference herein unless expressly included herein.

Each feature disclosed herein, and (where appropriate) as part of the claims and drawings may be provided independently or in any appropriate combination.

Any reference numerals appearing in the claims are for illustration only and shall not limit the scope of the claims.

## Claims

1. An apparatus for climbing a structure, the apparatus comprising a/an:
ascent mechanism for elevating the apparatus up the structure;
arresting mechanism for actuation between a:
first position in which the arresting mechanism is engaged to the structure so as to impede descent of the apparatus; and
second position in which the arresting mechanism is disengaged from the structure so as to allow ascent of the apparatus;
urging mechanism for urging the arresting mechanism into the first position;
retention mechanism configured to work against the urging mechanism and for retaining the arresting mechanism in the second position;
power supply configured to power both the ascent mechanism and the retention mechanism, such that:
when powered by the power supply and the ascent mechanism is activated, the retention mechanism is configured to retain the arresting mechanism in the second position and the ascent mechanism is operable to ascend the structure; and
when unpowered, the retention mechanism is caused to release the arresting mechanism, thereby causing the urging mechanism to actuate the arresting mechanism into the first position, and the ascent mechanism is deactivated.

2. The apparatus according to Claim 1, wherein the apparatus comprises a first portion and a second portion, said portions being openable so as to receive the structure into the apparatus by a slotting action.

3. The apparatus according to Claim 1 or 2, wherein the urging mechanism is configured to urge the arresting mechanism, when in the first position, against the, or a portion of the, ascent mechanism so as to prevent operation of the ascent mechanism.

4. The apparatus according to any one of the preceding claims, wherein the arresting mechanism comprises, at least a part of, the ascent mechanism.

5. The apparatus according to any one of preceding claims, wherein the arresting mechanism comprises a braking pad for contacting the structure so as to cause braking.

6. The apparatus according to any one of the preceding claims, wherein the arresting mechanism comprises an arrestor for contacting the ascent mechanism so as to prevent operation of the ascent mechanism.

7. The apparatus according to any one of the preceding claims, comprising at least two opposing wheels for engaging the structure and a compression mechanism for forcing said wheel towards the ascent mechanism.

8. The apparatus according to any one of the preceding claims, wherein the retention mechanism comprises an actuator.

9. The apparatus according to any of the preceding claims, wherein the urging mechanism is gravity-powered so as to urge the arresting mechanism into the first position under gravity.
